# EUROPÄISCHE PATENTANMELDUNG

(11) **EP 4 707 166 A1**
(43) Veröffentlichungstag der Anmeldung: **11.03.2026**
(21) Anmeldenummer: 25200096.3
(22) Anmeldetag: 04.09.2025
(51) Int. Cl.: B64C 3/26, B64C 3/44, B64C 3/14

(54) **AERODYNAMISCHER PROFILKÖRPER UND FLUGOBJEKT HIERZU**

(30) Priorität: 09.09.2024 DE 102024125738
(71) Anmelder: Deutsches Zentrum für Luft- und Raumfahrt e.V., 53227 Bonn-Oberkassel (DE)
(72) Erfinder: Tikalsky, Jan, 39179 Barleben (DE)
(74) Vertreter: Gramm, Lins & Partner Patent- und Rechtsanwälte PartGmbB

(57) **Zusammenfassung**

Die Erfindung betrifft einen aerodynamischen Profilkörper mit einer äußeren Strömungsoberfläche zur Anströmung durch ein Fluid, wobei der aerodynamische Profilkörper aufweist:
- eine erste Decklage und eine zweite Decklage, die zumindest einen Teil der äußeren Strömungsoberfläche bilden und in einem Endabschnitt des aerodynamischen Profilkörpers biegeelastisch ausgebildet sind,
- eine Verbindungsanordnung, welche die erste Decklage mit der zweiten Decklage des Profilkörpers im Endabschnitt flexibel verbindet, und
- eine Aktuatorvorrichtung mit mindestens einem in einem Innenraum des aerodynamischen Profilkörpers vorgesehenen Aktuator, der mit wenigstens einer der Decklagen im biegeelastischen Endabschnitt derart zusammenwirkt, dass der Querschnitt des aerodynamischen Profilkörpers im biegeelastischen Endabschnitt durch den mindestens einen Aktuator veränderbar ist,
**dadurch gekennzeichnet, dass**
- die äußere Strömungsoberfläche wenigstens einer der Decklagen im biegeelastischen Endabschnitt zumindest abschnittsweise ein sich parallel zur Strömungsrichtung erstreckendes Oberflächenprofil hat.

## Beschreibung

Die Erfindung betrifft einen aerodynamischer Profilkörper mit einer äußeren Strömungsoberfläche zur Anströmung durch ein Fluid. Die Erfindung betrifft ebenso ein Flugobjekt hierzu.

Ein solcher aerodynamischer Profilkörper kann einen Vorderkantenabschnitt, einen sich daran anschließenden Hauptabschnitt und einen sich daran anschließenden Hinterkantenabschnitt aufweisen. Die äußere Strömungsoberfläche wird dabei durch eine erste Decklage und eine zweite Decklage gebildet, die sich von dem Vorderkantenabschnitt über den Hauptabschnitt bis zum Hinterkantenabschnitt erstreckt, vorzugsweise einstückig. Dabei ist es auch denkbar, dass die erste Decklage und die zweite Decklage durchgehend ausgebildet sind.

Die Form eines Gegenstandes spielt nicht nur vor dem Hintergrund des Designs eine große Rolle, sondern ist in vielen Fällen auch aus technischer Hinsicht entscheidend. So ist es beispielsweise für Tragflächen von Flugzeugen entscheidend, dass die Form der Tragflächen die notwendigen aerodynamischen Eigenschaften aufweist, damit der zum Fliegen benötigte Auftrieb erzeugt werden kann. Eine stabile Form ist hier wesentlich, nicht nur aus sicherheitstechnischen Aspekten.

Gerade im Bereich der Tragflächen von Flugzeugen offenbaren jedoch starre Formen ihren größten Nachteil, nämlich dass sie unveränderbar sind. Denn je nach Flugphase ist es wünschenswert, dass die Tragflächen unterschiedliche aerodynamische Eigenschaften besitzen, um sich an die jeweilige Flugphase bestmöglich anzupassen. Daher weisen Tragflächen großer Verkehrsflugzeuge in der Regel Hochauftriebshilfen (auch Landeklappen genannt) auf, die während der Start- und Landephase ausgefahren werden und so die Auftriebsfläche der Tragflächen vergrößern. Dabei entsteht eine Querschnittsveränderung der Profile der Tragflächen, die es den Verkehrsflugzeugen ermöglicht, den notwendigen Auftrieb mit Hilfe der Tragflächen auch bei niedrigen Geschwindigkeiten zu erzeugen, ohne einen Strömungsabriss befürchten zu müssen.

Bei derartigen Hochauftriebshilfen erfolgt jedoch die Veränderung des Profils rein mechanisch derart, dass die Grundform des Querschnitts der Tragflächen unverändert bleibt, während die Hochauftriebshilfen zusätzliche mechanische Elemente darstellen, die in eine entsprechende Zielstellung gebracht werden können. Eine tatsächliche Formveränderung der Tragflächen findet jedoch nicht statt.

Dies führt zu zwei wesentlichen Nachteilen. Zum einen wird aufgrund der benötigten Mechanik und Kinematik ein nicht unerheblicher Gewichtseintrag in die Struktur der Flügel erzeugt, die dem eigentlichen Leichtbaugedanken in der Luft- und Raumfahrt entgegensteht. Zum anderen werden an den Übergängen zwischen der unveränderlichen Hauptstruktur und den veränderlichen Hochauftriebshilfen an den Hinterkanten Störungen in der Strömungsoberfläche des Profils erzeugt, die der Aufrechterhaltung einer laminaren Grenzschichtströmung grundsätzlich entgegenstehen. Eine solche laminare Grenzschichtströmung ist jedoch ein Ziel zur Reduktion des Widerstandes und somit zur Reduktion des Treibstoffverbrauchs. Es gibt daher Bestrebungen, derartige Hochauftriebshilfen nicht durch mechanisch ausfahrbare Hochauftriebshilfen zu realisieren, sondern durch eine Formveränderung des Querschnittsprofils.

Dies trifft insoweit auch auf das Querruder sowie das Seiten- und Höhenleitwerk zu, die während des Fluges zwar oftmals nur in geringem Maße, aber dafür sehr häufig ausgeschlagen werden.

Aus der europäischen Patentanmeldung Nr. 2 006 936 ist eine formveränderbare Struktur einer Tragfläche bekannt, bei der ohne zusätzliche mechanische Hilfsmittel die tatsächliche Form bzw. das Profil der Tragfläche in einem begrenzten Umfang geändert werden kann. Hierzu werden zwei oder mehr Reihen von miteinander verbundenen Zellen vorgeschlagen, wobei die Zellen einer Reihe mit einem Druck beaufschlagt werden. Werden nun die Zellen der ersten Reihe mit einem hohen Druck und die Zellen der zweiten Reihe mit einem niedrigen Druck beaufschlagt, so verändert sich das Profil der Tragfläche in eine gewünschte erste Form. Wird das Druckverhältnis der Zellreihen jedoch umgekehrt, so kann die Form wieder zurück in die Ausgangsform überführt werden.

Aus der US 2005/0029406 A1 ist ein Aktuator bekannt, der mit Hilfe von druckdichten Zellen seine Länge verändern kann. Durch Aufbringen eines Druckes in bestimmten Zellen wird deren Form so verändert, dass es insgesamt zu einer Längenveränderung des Aktuators kommt. Hierdurch lassen sich hydraulische Elemente einer mechanischen Anlage, beispielsweise eines Querruders eines Flugzeuges, ersetzen.

Derzeit sind Flügelprofile in der Erforschung, bei der die Hinterkante eines solchen Flügels formvariable ist, umso den Querschnitt der Hinterkante zu verändern und dadurch ggfs. eine Hochauftriebshilfen zu erreichen oder die Funktionalität von Querruder sowie Seiten- und Höhenleitwerk nachzubilden. Hierfür sind die Decklagen (auch Flügelhaut genannt) der Flügelprofile biegeelastisch und damit formveränderlich ausgebildet, sodass mithilfe von im Inneren des Flügelprofils angeordneten Aktuatoren eine elastische Verformung der Decklagen und dadurch eine Querschnittsveränderung der Hinterkante erreicht werden kann. Dabei wird nicht nur der Querschnitt des gesamten Profils verändert, sondern auch der Querschnitt der formveränderlichen Hinterkante, sodass die eigentliche geometrische Form, insbesondere die geometrische Form des Querschnitts der Hinterkante verändert wird.

Ein solches Flügelprofil ist bspw. aus der nachveröffentlichten DE 10 2023 117 337.5 bekannt. Dabei sind die Decklagen am Ende des Hinterkantenabschnittes über eine flexible Verbindungsanordnung in Form eines Festkörpergelenkes miteinander verbunden, sodass Veränderungen der Querschnittsform zu einem relativen Verschieben der ersten Decklage zu der zweiten Decklage erfolgt. Infolgedessen werden die Spannungen innerhalb der Decklagen reduziert.

Um eine Veränderung der Querschnittsform des aerodynamischen Profilkörpers zu erreichen, muss eine Kraft vertikal auf den zu verändernden Abschnitt des Profilkörpers aufgebracht werden. Dies ist von außen bei einem Flügelkörper schlichtweg nicht möglich. Daher muss die den Profilkörper verändernde vertikale Kraft durch eine Aktuatorvorrichtung im Inneren des Profilkörpers erzeugt werden. Eine solche Anordnung findet sich in der nachveröffentlichten DE 10 2024 103 686.9, aus der ein aerodynamischer Profilkörper bekannt ist, bei dem im Endabschnitt eine obere und die untere Decklage biegeelastisch ausgebildet sind und mittels einer im Innenraum angeordneten Aktuatorvorrichtung im Querschnitt verändert werden können.

Durch eine Verformung des Querschnittes im Endabschnitt können spannweitig Zug- und Druckbelastungen entstehen, wenn der gesamte Endabschnitt nicht über die gesamte Spannweite verformt wird.

Es ist daher Aufgabe der vorliegenden Erfindung einen aerodynamischen Profilkörper mit einer entsprechenden Aktuatorvorrichtung vorzuschlagen, mit der sich die Querschnittsform des Profilkörpers auch nur partiell verändern lässt.

Die Aufgabe wird mit dem aerodynamischen Profilkörper gemäß Anspruch 1 erfindungsgemäß gelöst. Vorteilhafte Ausgestaltungen der Erfindung finden sich dann in den entsprechenden Unteransprüchen.

Gemäß Anspruch 1 wird ein Aerodynamischer Profilkörper mit einer äußeren Strömungsoberfläche zur Anströmung durch ein Fluid, wobei der aerodynamische Profilkörper eine erste Decklage und eine zweite Decklage, die zumindest einen Teil der äußeren Strömungsoberfläche bilden und in einem Endabschnitt des aerodynamischen Profilkörpers biegeelastisch ausgebildet sind, eine Verbindungsanordnung, welche die erste Decklage mit der zweiten Decklage des Profilkörpers im Endabschnitt flexibel verbindet, und eine Aktuatorvorrichtung mit mindestens einem in einem Innenraum des aerodynamischen Profilkörpers vorgesehenen Aktuator, der mit wenigstens einer der Decklagen im biegeelastischen Endabschnitt derart zusammenwirkt, dass der Querschnitt des aerodynamischen Profilkörpers im biegeelastischen Endabschnitt durch den mindestens einen Aktuator veränderbar ist, aufweist.

Erfindungsgemäß ist vorgesehen, dass die äußere Strömungsoberfläche wenigstens einer der Decklagen im biegeelastischen Endabschnitt zumindest abschnittsweise ein sich parallel zur Strömungsrichtung erstreckendes Oberflächenprofil hat.

Durch die Profilierung der Strömungsoberfläche im biegeelastischen Endabschnitt von wenigstens einer der Decklagen können Zug- und Druckbelastungen bei einer Verformung der Decklagen kompensiert werden. Durch die Ausrichtung des Profils parallel zur Strömungsrichtung ermöglicht darüber hinaus eine ungehinderte Anströmung der äußeren Strömungsoberfläche, ohne dabei den Strömungswiderstand wesentlich zu erhöhen.

Ein solches Oberflächenprofil weist dabei im Querschnitt beispielsweise ein Wellenprofil auf, das einen Obergurt und einem Untergurt aufweist. Der Obergurt ist dabei in Richtung der äußeren Strömungsoberfläche ausgerichtet, während der Untergurt in Richtung des Innenraumes ausgerichtet ist. Der Obergurt und der Untergurt, mithin also die Berge und Täler des Wellenprofils, verlaufen dabei parallel zur Strömungsrichtung.

Die Strömungsrichtung ist dabei vorzugsweise definiert in Tiefenrichtung.

Unter der Spannweite des Profilkörpers wird dabei die längliche Ausdehnung des Profilkörpers ausgehend vom Rumpf oder der Befestigung und dann weg davon verstanden. Die Tiefenrichtung beschreibt dabei die Ausdehnung des Profilkörpers in der Ebene der Strömungsrichtung und die Dickenrichtung bzw. Profilhöhe des Profilkörpers beschreibt die Ausdehnung des Profilkörpers quer zur Spannweite und quer zur Tiefenrichtung.

Handelt es sich bei dem Flügelkörper um eine Tragfläche eines Flugzeugs, so ist die Spannweite in Richtung Querachse (Nickachse) des Flugzeugs ausgerichtet, die Flügeltiefenrichtung in Richtung Längsachse (Rollachse) des Flugzeugs ausgerichtet und die Flügeldickenrichtung bzw. Profilhöhe in Richtung Vertikalachse (Gierachse) ausgerichtet.

Äquivalent hierzu sind die Ausrichtungen bei einem Seitenleitwerk. Die Richtung weg vom Rumpf ist die Spannweite, Die Richtung in Strömungsrichtung ist die Tiefenrichtung und die Richtung quer zu beidem ist die Dickenrichtung.

Die längliche Ausdehnung des Oberflächenprofils ist somit parallel zur Tiefenrichtung des Profilkörpers vorgesehen. Ein spannweitiger Querschnitt zeigt dabei die entsprechende Profilform des Oberflächenprofils.

Der Querschnitt im Sinne der vorliegenden Erfindung ist hierbei eine Ebene orthogonal zur Spannweite bzw. orthogonal zu den beiden spannweitig erstreckenden Ebenen.

Gemäß einer Ausführungsform ist vorgesehen, dass die äußere Strömungsoberfläche der wenigstens einen Decklage im biegeelastischen Endabschnitt in Spannweite in eine Mehrzahl von Profilabschnitten unterteilt ist, die jeweils ein sich parallel zur Strömungsrichtung erstreckendes Oberflächenprofil aufweisen.

Durch diese Segmentierung der Strömungsoberfläche im Endabschnitt in Spannweite in einzelne Profilabschnitt kann erreicht werden, dass jeder dieser Profilabschnitt oder zumindest zwei benachbarte Profilabschnitt von den Anderen getrennt aktuiert werden können.

Gemäß einer Ausführungsform hierzu ist vorgesehen, dass jeder Profilabschnitt mit zumindest einem Aktuator der Aktuatorvorrichtung in Wirkverbindung steht, um den Querschnitt des aerodynamischen Profilkörpers in dem jeweiligen Profilabschnitt des biegeelastischen Endabschnittes zu verändern.

Dadurch lässt sich gezielt der Querschnitt des Profilkörpers an unterschiedlichen Positionen in der Spannweite verändern. Dadurch kann eine erste Querschnittsänderung des Profilkörpers an einer ersten Position in der Spannweite verändert werden, die sich von einer zweiten Querschnittsänderung, die zu der ersten Querschnittsänderung verschieden ist, an einer zweiten Position, die von der ersten Position verschieden ist, unterscheidet.

Gemäß einer Ausführungsform ist vorgesehen, dass zwischen zwei Profilabschnitten ein Verbindungsabschnitt vorgesehen ist, wobei die äußere Strömungsoberfläche der wenigstens einen Decklage in dem Verbindungsabschnitt kein Oberflächenprofil aufweist.

Dabei ist es besonders vorteilhaft, wenn die Aktuatoren der Aktuatorvorrichtung mit diesen Verbindungsabschnitt und in Wirkverbindung stehen. Es kann dabei vorgesehen sein, dass jeder Verbindungsabschnitt mit einem Aktuator in Wirkverbindung steht, sodass hierüber eine Querschnittsänderung der beiden benachbarten Profilabschnitt realisiert wird, wenn der Verbindungsabschnitt durch den Aktuator in seinem Querschnitt verändert wird.

Gemäß einer Ausführungsform ist vorgesehen, dass die Profilstärke des Oberflächenprofils in Richtung Endabschnitt zunimmt. Die Profilstärke ist dabei der Abstand im Querschnitt zwischen dem Obergurt und dem Untergurt. Handelt es sich bei dem Profil um ein Wellenprofil, so kann auch von einer Amplitude gesprochen werden, die in Richtung Endabschnitt zunimmt.

Hierdurch können Sprünge am Beginn des Oberflächenprofils in der Strömungsoberfläche vermieden werden, um zu verhindern, dass Hindernisse in der Strömungsoberfläche zu einer Erhöhung des Luftwiderstandes führen.

Gemäß einer Ausführungsform ist vorgesehen, dass die Verbindungsanordnung ein flexibles Festkörpergelenk umfasst.

Der Endabschnitt des Profilkörpers wird dabei als elastisches System betrachtet. Die durch die Verformung auftretende Verschiebung der ersten Decklage zu der zweiten Decklage wird akzeptiert und durch das flexibles Festkörpergelenk kompensiert. Das flexible Festkörpergelenk verbindet dabei die ersten Decklage mit der zweiten Decklage im Endabschnitt und ermöglicht so eine relative Schubbewegung bzw. ein relatives Verschieben zwischen der ersten Decklage und der zweiten Decklage, wenn der Querschnitt des Endabschnitt durch die Aktuatorvorrichtung verändert wird. Die elastische Verbindung mittels des flexiblen Festkörpergelenks reduziert die auf die ersten Decklage und zweiten Decklage wirkenden Lasten bei der Veränderung des Querschnitts durch die Aktuatorvorrichtung.

Hierdurch wird es möglich, einen hinsichtlich des Querschnitts veränderbaren und hinsichtlich der Form veränderbaren Endabschnitt eines Profilkörpers bereitzustellen, der durch eine relativ geringe Kraft und somit durch eine reduzierte Aktuatorvorrichtung verformt werden kann. Gleichzeitig kann eine durchgehende ersten und/oder zweiten Decklage realisiert werden, die insbesondere sich vom Hauptabschnitt bis zum Endabschnitt unterbrechungsfrei erstreckt, wodurch Sprünge und Stufen in der Strömungsoberfläche vermieden und eine laminare Grenzschichtströmung grundsätzlich begünstigt wird.

Gemäß einer Ausführungsform ist vorgesehen, dass das flexible Festkörpergelenk sich spannweitig erstreckt und einen Teil der äußeren Strömungsoberfläche bildet.

Gemäß einer Ausführungsform ist vorgesehen, dass die Decklagen aus einem Faserverbundwerkstoff aufweisend ein Fasermaterial und ein das Fasermaterial einbettendes Matrixmaterial gebildet sind und/oder dass die Decklagen aus einem Metallwerkstoff gebildet sind.

Ein solcher Faserverbundwerkstoff kann beispielsweise ein CFK oder GFK sein. Dabei ist es denkbar, dass die erste Decklage und die zweite Decklage einstückig ausgebildet sind, d. h. sich die erste Decklage und die zweite Decklage bspw von dem Vorderkantenabschnitt über den Hauptabschnitt bis zum Hinterkantenabschnitt ohne Unterbrechung und ohne Fügestellen erstreckt.

Gemäß einer Ausführungsform ist vorgesehen, dass der aerodynamische Profilkörper ein Flügel und der Endabschnitt einen Hinterkantenabschnitt des Flügels ist.

Die Aufgabe wird auch mit einem Flugobjekt gemäß Anspruch 9 erfindungsgemäß gelöst, wobei das Flugobjekt mindestens einen aerodynamischen Profilkörper wie vorstehend beschrieben aufweist.

Die Aufgabe wird im Übrigen auch mit dem Verfahren zum Verändern der Profilform eines Tragflügels eines Flugzeugs im Flug gemäß Anspruch 11 erfindungsgemäß gelöst, wobei die Tragflügel des Flugzeugs als aerodynamische Profilkörper gemäß einem der Ansprüche 1 bis 9 ausgebildet sind, wobei zur Veränderung der Profilform der Tragflügel Steuersignale für die Aktuatorvorrichtung der aerodynamischen Profilkörper generiert und an die Aktuatorvorrichtung übertragen werden, um die Profilform der Tragflügel zu verändern.

Gemäß einer Ausführungsform ist vorgesehen, dass Flugparameter des Fluges im Flug des Flugzeugs erfasst und die Steuersignale in Abhängigkeit von den erfassten Flugparametern generiert werden.

Gemäß einer Ausführungsform ist vorgesehen, dass die Flugparameter die Geschwindigkeit des Flugzeugs und/oder die Höhe des Flugzeugs sind.

Die Erfindung wird anhand der beigefügten Figuren beispielhaften erläutert. Es zeigen:
Figur 1 perspektivische Darstellung eines Ausschnittes eines Flügels als Profilkörper;
Figur 2 detaillierte Draufsicht auf einen Profilabschnitt und Verbindungsabschnitt.

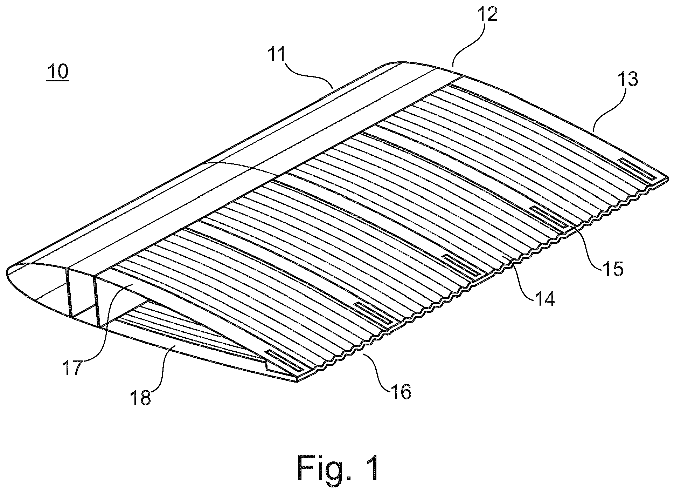

Figur 1 zeigt in einer perspektivischen Darstellung einen Ausschnitt eines Flügels 10, der beispielhaft als Profilkörper im Sinne der vorliegenden Erfindung dienen soll. Der Flügel 10 weist eine Vorderkante 11 auf, an die sich ein Hauptabschnitt 12 und eine Hinterkante 13 als Endabschnitt im Sinne der vorliegenden Erfindung anschließt.

Die Hinterkante 13 ist in mehrere Profilabschnitt 14 unterteilt, zwischen den jeweils ein Verbindungsabschnitt 15 vorgesehen ist.

Die Profilabschnitte 14 erstrecken sich von dem Hauptabschnitt 12 (oftmals auch Flügelkasten genannt und hier aus Darstellungszwecken relativ kurz eingezeichnet) in Richtung der Endkante 16, an dem das Strömungsprofil endet. Zumindest die Hinterkante 13 wird dabei aus einer erste Decklage 17 und einer zweiten Decklage 18 gebildet. Die Verbindungsabschnitte 15 hingegen weisen eine glatte Oberfläche auf und besitzen insbesondere keine Profilform.

In einem Innenraum des Flügels 10 befinden sich mehrere Aktuatoren (nicht dargestellt), die an einer Innenseite der Verbindungsabschnitte 15 befestigt sind.

Durch eine Aktuierung der Aktuatoren kann dabei der Querschnitt der Verbindungsabschnitte 15 verändert werden, indem diese beispielsweise nach unten oder nach oben (bezogen auf die Abbildung) verbogen werden.

Die Profilabschnittes 14 weisen ein Oberflächenprofil auf, dass sich in Flügeltiefenrichtung von dem Hauptabschnitt 12 zu der Endkante 16 länglich erstreckt.

Wird nun einer der Verbindungsabschnitte 15 in Flügeldickenrichtung durch eine Aktuierung der Aktuatoren ausgelenkt, so werden auch die benachbarten Profilabschnitt 14 verformt, wobei aufgrund des Oberflächenprofils der Profilabschnittes 14 die Zug- und/oder Druckbelastungen bei der Verformung kompensiert werden können.

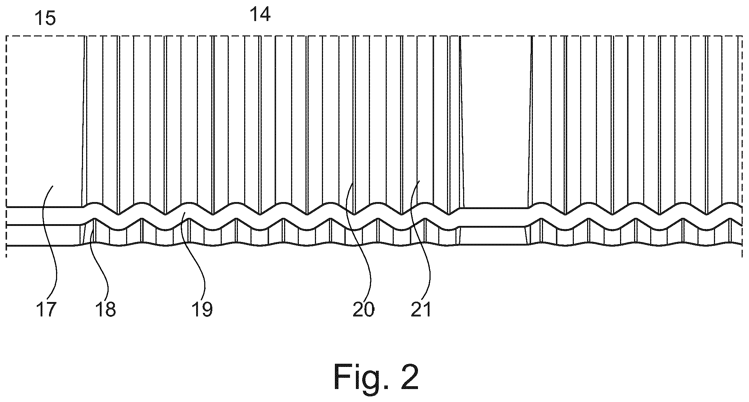

Eine solche Profilform eines Profilabschnittes 14 des dabei in Figur 2 im Detail gezeigt. Das Oberflächenprofil weist dabei Berge 20 und Täler 21 auf, die auch als Obergurt 20 und Untergurt 21 bezeichnet werden können.

An der Endkante 16, an der die erste Decklage 17 und die zweite Decklage 18 zusammengeführt werden, befindet sich ein flexibles Festkörpergelenk 19, welches eine Verschiebung der Decklagen 17 und 18 zueinander bei der Verformung ausgleichen soll.

Wie in Figur 1 zu erkennen, beginnt das Oberflächenprofil in den Profilabschnitt und 14 langsam und Richtung Endkante 16 stetig größer werdend. Die Wertigkeit des Oberflächenprofils in den Profilabschnitt und 14 nimmt somit in Richtung Endkante 16 zu, um Sprünge bzw. Stufen am Übergang zwischen Hauptabschnitt 12 und Hinterkante 13 innerhalb der Profilabschnittes 14 zu vermeiden.

Die Decklagen 17, 18 können dabei aus einem Faserverbundwerkstoff hergestellt sein, was eine flexible Verformung innerhalb der Systemgrenzen ermöglicht und dem Leichtbaugedanken trifft.

### Bezugszeichenliste

10 aerodynamischer Profilkörper/Flügel
11 Vorderkante
12 Hauptabschnitt/Flügelkasten
13 Endabschnitt/Hinterkante
14 Profilabschnitt
15 Verbindungsabschnitt
16 Endkante
17 erste Decklage
18 zweite Decklage
19 Verbindungsanordnung/flexibles Festkörpergelenk
20 Obergurt
21 Untergurt

## Patentansprüche

1. Aerodynamischer Profilkörper (10) mit einer äußeren Strömungsoberfläche zur Anströmung durch ein Fluid, wobei der aerodynamische Profilkörper (10) aufweist:
- eine erste Decklage (17) und eine zweite Decklage (18), die zumindest einen Teil der äußeren Strömungsoberfläche bilden und in einem Endabschnitt (13) des aerodynamischen Profilkörpers (10) biegeelastisch ausgebildet sind,
- eine Verbindungsanordnung (19), welche die erste Decklage (17) mit der zweiten Decklage (18) des Profilkörpers (10) im Endabschnitt (13) flexibel verbindet, und
- eine Aktuatorvorrichtung mit mindestens einem in einem Innenraum des aerodynamischen Profilkörpers (10) vorgesehenen Aktuator, der mit wenigstens einer der Decklagen (17, 18) im biegeelastischen Endabschnitt (13) derart zusammenwirkt, dass der Querschnitt des aerodynamischen Profilkörpers (10) im biegeelastischen Endabschnitt (13) durch den mindestens einen Aktuator veränderbar ist,
**dadurch gekennzeichnet, dass**
- die äußere Strömungsoberfläche wenigstens einer der Decklagen (17, 18) im biegeelastischen Endabschnitt (13) zumindest abschnittsweise ein sich parallel zur Strömungsrichtung erstreckendes Oberflächenprofil hat.

2. Aerodynamischer Profilkörper (10) nach Anspruch 1, **dadurch gekennzeichnet, dass** die äußere Strömungsoberfläche der wenigstens einen Decklage (17, 18) im biegeelastischen Endabschnitt (13) in Spannweite in eine Mehrzahl von Profilabschnitten (14) unterteilt ist, die jeweils ein sich parallel zur Strömungsrichtung erstreckendes Oberflächenprofil aufweisen.

3. Aerodynamischer Profilkörper (10) nach Anspruch 2, **dadurch gekennzeichnet, dass** jeder Profilabschnitt (14) mit zumindest einem Aktuator der Aktuatorvorrichtung in Wirkverbindung steht, um den Querschnitt des aerodynamischen Profilkörpers (10) in dem jeweiligen Profilabschnitt (14) des biegeelastischen Endabschnittes (13) zu verändern.

4. Aerodynamischer Profilkörper (10) nach Anspruch 2 oder 3, **dadurch gekennzeichnet, dass** zwischen zwei Profilabschnitten (14) ein Verbindungsabschnitt (15) vorgesehen ist, wobei die äußere Strömungsoberfläche der wenigstens einen Decklage (17, 18) in dem Verbindungsabschnitt (15) kein Oberflächenprofil aufweist.

5. Aerodynamischer Profilkörper (10) nach einem der vorhergehenden Ansprüche, **dadurch gekennzeichnet, dass** die Profilstärke des Oberflächenprofils in Richtung Endabschnitt (13) zunimmt.

6. Aerodynamischer Profilkörper (10) nach einem der vorhergehenden Ansprüche, **dadurch gekennzeichnet, dass** die Verbindungsanordnung (19) ein flexibles Festkörpergelenk (19) umfasst.

7. Aerodynamischer Profilkörper (10) nach Anspruch 6, **dadurch gekennzeichnet, dass** das flexible Festkörpergelenk (19) sich spannweitig erstreckt und einen Teil der äußeren Strömungsoberfläche bildet.

8. Aerodynamischer Profilkörper (10) nach einem der vorhergehenden Ansprüche, **dadurch gekennzeichnet, dass** die Decklagen (17, 18) aus einem Faserverbundwerkstoff aufweisend ein Fasermaterial und ein das Fasermaterial einbettendes Matrixmaterial gebildet sind und/oder dass die Decklagen (17, 18) aus einem Metallwerkstoff gebildet sind.

9. Aerodynamischer Profilkörper (10) nach einem der vorhergehenden Ansprüche, **dadurch gekennzeichnet, dass** der aerodynamische Profilkörper (10) ein Flügel (10) und der Endabschnitt (13) einen Hinterkantenabschnitt des Flügels (10) ist.

10. Flugobjekt mit mindestens einem aerodynamischen Profilkörper (10) nach einem der vorhergehenden Ansprüche.

11. Verfahren zum Verändern der Profilform eines Tragflügels eines Flugzeugs im Flug, wobei die Tragflügel des Flugzeugs als aerodynamische Profilkörper (10) gemäß einem der Ansprüche 1 bis 9 ausgebildet sind, wobei zur Veränderung der Profilform der Tragflügel Steuersignale für die Aktuatorvorrichtung der aerodynamischen Profilkörper (10) generiert und an die Aktuatorvorrichtung übertragen werden, um die Profilform der Tragflügel zu verändern.

12. Verfahren nach Anspruch 11, **dadurch gekennzeichnet, dass** Flugparameter des Fluges im Flug des Flugzeugs erfasst und die Steuersignale in Abhängigkeit von den erfassten Flugparametern generiert werden.

13. Verfahren nach Anspruch 12, **dadurch gekennzeichnet, dass** die Flugparameter die Geschwindigkeit des Flugzeugs, benötigter Auftrieb, gewünschtes Manöver und/oder die Höhe des Flugzeugs sind.
